# EUROPÄISCHE PATENTSCHRIFT

(11) **EP 0 597 438 B1**
(45) Veröffentlichungstag und Bekanntmachung des Hinweises auf die Patenterteilung: **28.08.1996**
(21) Anmeldenummer: 93118121.8
(22) Anmeldetag: 09.11.1993
(51) Int. Cl.: F16C 19/44, F16C 33/60, F16C 33/72

(54) **Radial-Nadellager-Baueinheit mit integrierter Radial-Axialabdichtung und ggf. Axialabstützung**
Radial needle bearing unit with integrated radial and axial sealing, optionally with axial support
Unité de roulement à aiguilles radial avec joint d'étanchéité axial et radial, éventuellement avec support axial

(30) Priorität: 12.11.1992 DE 4238147
(43) Veröffentlichungstag der Anmeldung: 18.05.1994
(73) Patentinhaber: FORD-WERKE AKTIENGESELLSCHAFT, D-50725 Köln (DE); FORD MOTOR COMPANY LIMITED, Brentwood, Essex CM13 3BW (GB); FORD FRANCE SOCIETE ANONYME, F-92506 Rueil Malmaison Cedex (FR)
(72) Erfinder: Premiski, Vladimir, D-53902 Bad Muenstereifel/Willerscheidt (DE); Biedermann, Sieghart, D-50259 Pulheim (DE)
(74) Vertreter: Messulam, Alec Moses

(56) Entgegenhaltungen:
- EP-A- 0 379 869
- CH-A- 462 553
- FR-A- 2 558 548

## Beschreibung

Die Erfindung bezieht sich auf eine Radial-Nadellager-Baueinheit mit integrierter Radial-Axialabdichtung, der im Oberbegriff der Patentansprüche 1 und 6 erläuterten Art.

Aus der DE-A- 23 62 285 ist eine Radial-Nadellager-Baueinheit mit integrierter Axialabdichtung und Axialabstützung bekannt, bei der eine Außenhülse mit zumindest einem nach innen weisenden Bord und ein die Nadeln führender Käfig in Verbindung mit einer Anschlagscheibe und einem elastischen Ring, die innerhalb der Außenhülse liegen, eine Axialabstützung und eine Axialabdichtung bereitstellen.

Aus der DE-A- 38 05 707 ist eine ähnliche Radial-Nadellager-Baueinheit mit integrierter Radial-Axialabdichtung und Axialabstützung bekannt, bei der innerhalb der Außenhülse zwischen einem nach innen weisenden Bord und dem benachbarten Ende des Käfigs ein Dichtring eingesetzt ist, der kraftschlüssig und verdrehfest auf der Oberfläche der in dem Nadellager gelagerten Welle angeordnet ist und nach außen spreizend dichtend an der Außenhülse anliegt.

Bei den bekannten Radial-Nadellager-Baueinheiten handelt es sich jeweils um Nadellager ohne Innenhülse, was eine Anwendung nur bei entsprechender Oberflächengüte auf der zu lagernden Welle ermöglicht.

Die Aufgabe der Erfindung ist es, eine Radial-Nadellager-Baueinheit mit integrierter Radial-Axialabdichtung und Axialabstützung der im Oberbegriff des Patentanspruches 1 erläuterten Art derart zu verbessern, daß sie als kompakte Baueinheit einschließlich einer Innenhülse innerhalb z.B. eines Getriebeaggregates verbaut werden kann, so daß an die Oberflächenbeschaffenheiten in der Einbaubohrung und an der aufzunehmenden Welle geringere Anforderungen gestellt werden können und dennoch die Radial- und Axialabdichtung und die Axialabstützung an Oberflächen mit optimalen Laufeigenschaften ausgebildet werden können.

Gemäß der Erfindung wird diese Aufgabe gelöst, indem eine Radial-Nadellager-Baueinheit mit integrierter Radial-Axialabdichtung der im Oberbegriff der Patentansprüche 1 und 6 erläuterten Art die im Kennzeichenteil der Patentansprüche 1 und 6 aufgezeigten Merkmale aufweist.

Dadurch, daß eine Innenhülse mit zumindest einem nach außen weisenden Bord benachbart einem nach innen weisenden Bord der Außenhülse angeordnet ist, der Käfig mit zumindest einem nach außen weisenden Bord versehen und unmittelbar benachbart dem Bord auf der Innenhülse zentriert geführt ist und zwischen dem Bord des Käfigs und dem benachbarten Bord der Innenhülse ein nach außen spreizender, an der Außenhülse anliegender Dichtring angeordnet ist, wird eine Radial-Axialabdichtung im wesentlichen in Form einer herkömmlichen Dichtringanordnung geschaffen, wobei die Borde der Innenhülse und des Käfigs praktisch die Ringnut für den aufzunehmenden Dichtring bilden.

In den Ansprüchen 2 - 5, 7 und 8 sind weitere Einzelheiten der Erfindung näher erläutert.

Im Hinblick auf diese weiteren Ausführungsformen wird auf die DE-C- 10 09 445 hingewiesen, aus der bereits ein Radial-Nadellager mit einer Außenhülse mit zwei nach innen weisenden Borden und einem Käfig mit zwei nach außen weisenden Borden bekannt ist, die eine Axialabstützung bereitstellen.

Aus der DE-B- 16 75 087 ist eine Doppel-Anordung eines Radial-Nadellagers bekannt, bei dem eine Außenhülse mit zwei nach innen weisenden Borden in Verbindung mit einem Schulterabsatz an der Welle eine Axialabstützung bereitstellt.

Aus der DE-A- 23 52 820 ist ein Radial-Nadellager bekannt, bei dem der die Nadeln führende Käfig mit dem Käfig eines Rillenkugellagers verrastet ist, das für eine Axialabstützung sorgt und wobei seitliche radiale Abdichtscheiben an der Außenhülse vorgesehen sind.

Die Erfindung wird anhand dreier in den beiliegenden Zeichnungen gezeigter Ausführungsbeispielen näher erläutert. Es zeigt:
- Fig. 1: einen vertikalen Teilschnitt durch eine Radial-Nadellager-Baueinheit mit integrierter Radial-Axialabdichtung und Axialabstützung gemäß der Erfindung;
- Fig. 2: eine weitere Ausführungsform einer Radial-Nadellager-Baueinheit mit integrierter Radial-Axialabdichtung und Axialabstützung;
- Fig. 3: eine weitere Ausführungsform einer Radial- Nadellager-Baueinheit mit integrierter Radial-Axialabdichtung ohne Axialabstützung und
- Fig. 4: einen vertikalen Teilschnitt durch eine Lageranordnung mit zwei unterschiedlichen Ausführungsformen einer Radial-Nadellager-Baueinheit gemäß der Erfindung mit Radial-Axialabdichtung jedoch ohne Axialabstützung.

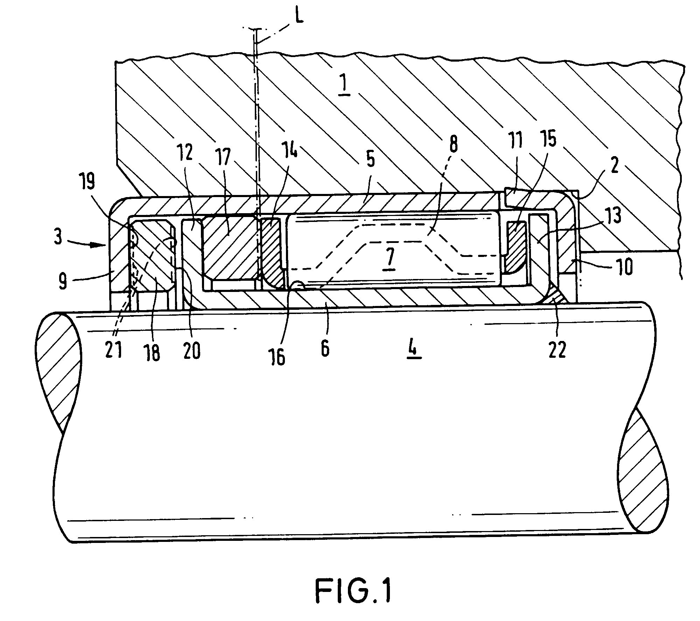

In Fig. 1 ist in einem Getriebegehäuse 1 eine Aufnahmebohrung 2 für eine Radial-Nadellager-Baueinheit 3 vorgesehen, mittels der eine Welle 4 drehbar gelagert, radial und axial abgedichtet und axial abgestützt werden soll.

Die Radial-Nadellager-Baueinheit 3 besteht im wesentlichen aus einer Außenhülse 5, einer Innenhülse 6 und aus einer Vielzahl von Nadeln 7, die von einem Käfig 8 geführt werden.

Die Außenhülse 5 ist mit nach innen weisenden Borden 9 und 10 versehen und kann an ihrem Außenumfang mit Rastzungen 11 zum Festkrallen in der Aufnahmebohrung 2 versehen sein.

Die Innenhülse 6 weist nach außen weisende Borde 12 und 13 auf, die innerhalb der Borde 9 und 10 der Außenhülse 5 angeordnet sind.

Der Käfig 8 weist nach außen weisende Borde 14 und 15 auf und ist zumindest benachbart einem der Borde z.B. 14 mit seinem Innenumfang bei 16 zentriert auf der Innenhülse 6 geführt. Ein radial nach außen spreizender Dichtring 17 ist zwischen dem Bord 12 der Innenhülse 6 und dem Bord 14 des Käfigs 8 angeordnet und liegt abdichtend gegen den Innenumfang der Außenhülse 5.

Ein Axialgleitring 18 ist zwischen dem Bord 9 der Außenhülse 5 und dem Bord 12 der Innenhülse 6 angeordnet und weist an seinen Seitenflanken 19 und 20 Schmierölnuten 21 auf.

An einem Ende der Innenhülse 6 kann eine angeformte Kunststoffdichtung 22 angeordnet sein, die abdichtend gegen den Außenumfang der Welle 4 anliegt.

Um ein erwünschtes minimales Axialspiel einzustellen, wird zwischen dem Dichtring 17 und dem Bord 14 eine Lehre L (in Strich-Punkt-Linien gezeigt) von z.B. 0,1 mm Dicke eingefügt und danach der Bord 13 der Innenhülse auf Block umgebördelt und danach die Lehre L (in Strich-Punkt-Linien gezeigt) wieder entfernt.

Die Außenhülse 5 wird mit einem Festsitz, der ggf. von den Rastzungen 11 verstärkt wird, in der Aufnahmebohrung 2 aufgenommen und festgehalten. Die Innenhülse 6 ist mit einem festen Schiebesitz auf der Welle 4 angeordnet und kann dadurch ggf. Axialbewegungen ausführen.

Geht man davon aus, daß die Radial-Nadellager-Baueinheit 3 von rechts aus dem Inneren des Getriebegehäuses 1 mit Schmiermitteldruck beaufschlagt wird, so gelangt dieser Schmiermitteldruck über die radialen Zwischenräume zwischen den rechten Borden 10, 13 und 15 zu den Nadeln 7, wo er für eine zuverlässige Schmierung sorgt und gelangt weiter in die von den Borden 12 und 14 gebildete Ringnut für den Dichtring 17, wo er den Dichtring in bekannter Weise radial nach außen und axial nach links in abdichtende Anlage an den Bord der Innenhülse 6 bzw. den Innenumfang der Außenhülse 5 drückt.

Für den Fall, daß die Welle 4 eine axiale Bewegung nach links ausführt, gelangt der Bord 12 in Anlage gegen den Axialgleitring 18 und drückt diesen gegen den Bord 9 der Außenhülse 5, wodurch die Axialbewegung der Welle 4 abgestützt wird.

Die angeformte Radialdichtung 22 kann Leckverluste zwischen der Welle 4 und der Innenhülse 6 vermeiden, falls die Innenhülse 6 auf der Welle 4 mit einem zu leichten Schiebesitz befestigt ist.

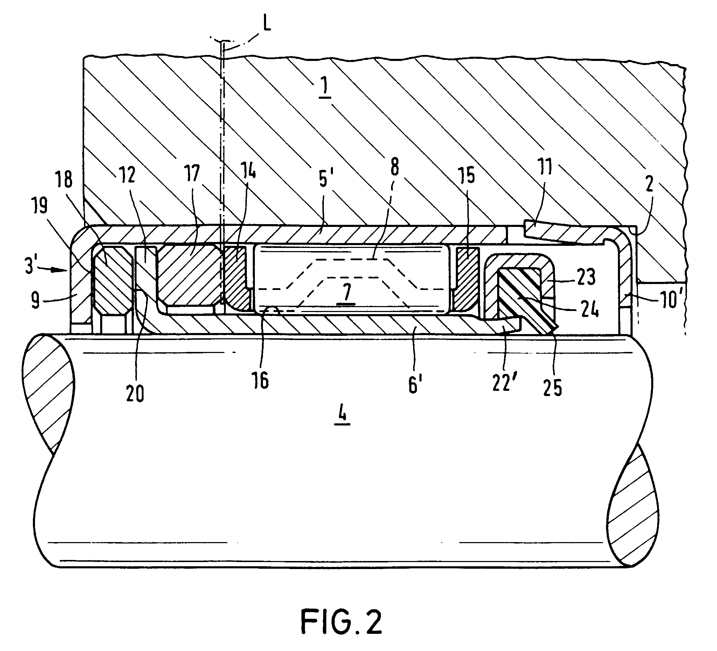

In Fig. 2 ist eine weitere Ausführungsform einer erfindungsgemäßen Radial-Nadellager-Baueinheit gezeigt, bei der Bauteile, die mit Bauteilen in Fig. 1 übereinstimmen, mit den gleichen Bezugszeichen versehen sind. Bauteile, die gegenüber den Bauteilen in Fig. 1 geringfügig modifiziert wurden, sind mit den gleichen Bezugszeichen wie in Fig. 1 jedoch einem zugefügten Strich-Index bezeichnet. Darüber hinausgehende neue Bauteile sind mit neuen Bezugszeichen versehen.

In Fig. 2 ist wieder in einem Getriebegehäuse 1 in einer Aufnahmebohrung 2 eine Radial-Nadellager-Baueinheit 3' aufgenommen, um eine Welle 4 drehbar zu lagern und radial-axial abzudichten und axial abzustützen.

Die Radial-Nadellager-Baueinheit 3' besteht im wesentlichen aus einer Außenhülse 5', einer Innenhülse 6' und einer Vielzahl von Nadeln 7, die in einem Käfig 8 geführt sind.

Die Außenhülse 5' ist an einem Ende mit einem nach innen weisenden Bord 9 und an ihrem anderen Ende mit einem etwas anders gestalteten, nach innen weisenden Bord 10' versehen. Am Außenumfang kann die Außenhülse 5' wieder mit Rastzungen 11 zum festlegen in der Aufnahmebohrung 2 versehen sein.

Die Innenhülse 6' ist links wieder mit einem nach außen weisenden Bord 12 versehen, an ihrem anderen Ende ist sie jedoch mit einer Bördelkante 22' versehen, mittels der ein U-förmiger Haltering 23 für eine Radialdichtung 24 mit einer Dichtlippe 25 befestigt wird. Auch hier wird ein erwünschtes minimales Axialspiel durch Einsatz einer Lehre L (in Strich-Punkt-Linien gezeigt)vor dem Anbördeln des Halteringes 23 erreicht.

Zwischen dem Bord 12 der Innenhülse 6' und dem Bord 14 des Käfigs 8 ist wieder ein nach außen spreizender Dichtring 17 angeordnet, der abdichtend gegen den Innenumfang der Außenhülse 5' anliegt. Der Käfig 8 ist benachbart seinem Bord 14 bei 16 wieder zentrierend an der Innenhülse 6' abgestützt.

Zwischen dem Bord 9 der Außenhülse 5' und dem Bord 12 der Innenhülse 6' ist wieder ein Axialgleitring 18 angeordnet, dessen Seitenflanken 19 und 20 mit den entsprechenden Flächen der Borde 9 und 12 eine Axialabstützung bereitstellend zusammenwirkt.

Bei den beiden gezeigten Ausführungsformen wird lediglich eine geringfügige axiale Bewegungsmöglichkeit der Welle 4 nach links in Betracht gezogen und dementsprechen ist nur an der linken Seite der Radial-Nadellager-Bauanordnung 3 bzw. 3' ein Axialgleitring 18 angeordnet. Selbstverständlich kann bei einer Anordnung, bei der eine Axialbewegung der Welle in beiden Richtungen zu berücksichtigen ist, auch eine entsprechende Axialgleitringanordnung an der rechten Seite der Radial-Nadellager-Baueinheit vorgenommen werden.

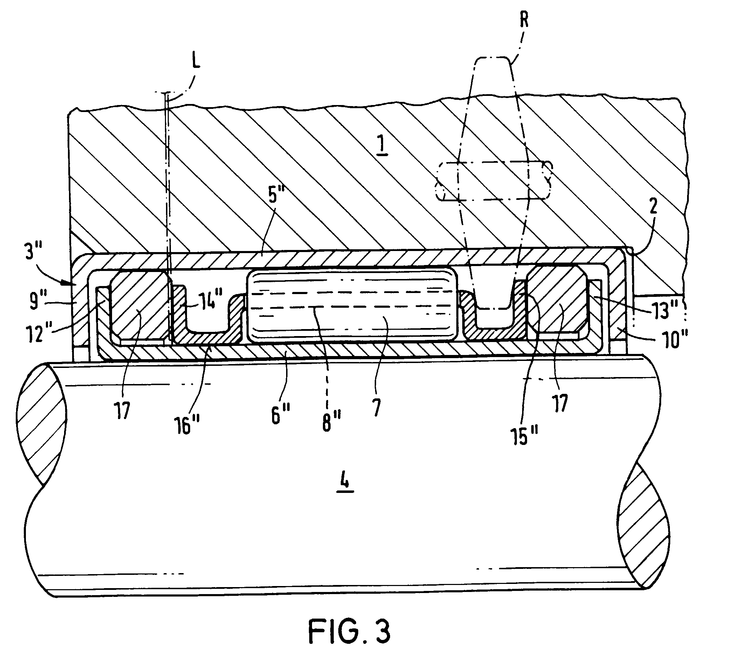

In Fig. 3 ist eine weitere Ausführungsform einer erfindungsgemäßen Radial-Nadellager-Baueinheit gezeigt, wobei wieder gleiche Bauteile mit gleichen Bezugszeichen und modifizierte Bauteile mit einem - Doppelstrich-Index bezeichnet sind.

In Fig. 3 ist wieder in einem Getriebegehäuse 1 in einer Aufnahmebohrung 2 eine Radial-Nadellager-Baueinheit 3'' aufgenommen, um eine Welle 4 drehbar zu lagern und radialaxial abzudichten.

Die Radial-Nadellager-Baueinheit 3'' besteht wieder aus einer Außenhülse 5'', einer Innenhülse 6'' und einer Vielzahl von Nadeln 7, die in einem Käfig 8'' geführt sind.

Die Außenhülse 5'' ist an beiden Enden mit nach innen weisenden Borden 9'' und 10'' versehen.

Die Innenhülse 6'' ist gleichfalls an beiden Enden mit nach außen weisenden Borden 12'' und 13'' versehen.

Der Käfig 8'' ist mit nach außen weisenden Borden 14'' und 15'' versehen.

Zwischen den Borden 12'' und 13'' der Innenhülse 6'' und den benachbarten, nach außen weißenden Borden 14'' und 15'' des Käfigs 8'' sind nach außen spreizende Dichtringe 17 angeordnet. Der Käfig 8'' kann wieder über einen Umfang 16'' zentriert an der Innenhülse 6'' abgestützt sein.

Um ein gewünschtes minimales Axialspiel der Dichtringe 17 in ihren Ringnuten zwischen den Borden 12'' und 14'' bzw. 13'' und 15'' einzustellen, wird bei auf der Innenhülse 6'' montierten Dichtringen 17 und Käfig 8'' mit den Nadeln 7 nachfolgend dem Umbördeln des Borders 13'' zwischen dem linken Dichtring 17 und dem Bord 14'' eine Lehre von z.B. 0,1 mm Dicke eingelegt (Lehre in Strich-Punkt-Linie angedeutet) und danach durch eine Rolloperation (Rolle R in Strich-Punkt-Linien angedeutet) der eine Bord 15'' des Käfigs 8'' entsprechend verformt.

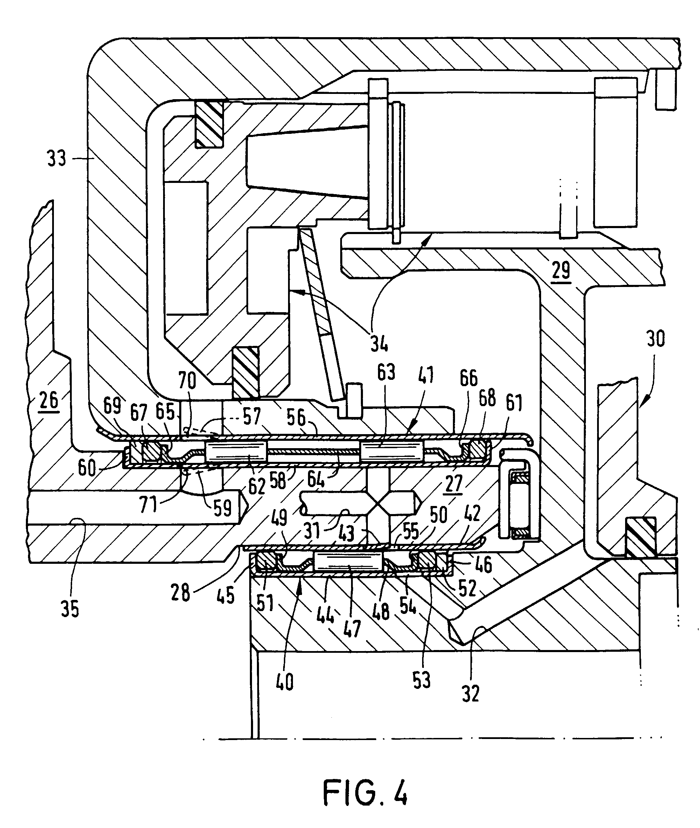

Auf diese Weise kann ohne Zwischenringe, wie sie noch in Verbindung mit Fig. 4 beschrieben werden, ein erwünschtes geringes Axialspiel bei geringen Herstellungskosten eingehalten werden.

In der Fig 4 ist eine Lageranordnung innerhalb eines automatischen Getriebes gezeigt, bei der in vorteilhafter Weise zwei unterschiedliche Ausführungsformen einer erfindungsgemäßen Radial-Nadellager-Baueinheit angewendet werden können. Hierbei sind zwar keine Axialkräfte abzustützen, jedoch ist es für diesen besonderen Anwendungsfall wünschenswert, die Radial-Nadellager-Baueinheit an beiden Seiten abzudichten.

In Fig. 4 ist an einer Endwand oder einem Mittenträger 26 eines automatischen Getriebes ein Rohransatz 27 ausgebildet, in dessen Innenbohrung 28 z.B. ein Eingangsteil 29 eines Planetengetriebes drehbar gelagert ist, das normalerweise eine Zylinder/Koben-Anordnung für eine hydraulisch betätigbare Kupplung 30 aufweist, die mit Druckmittel z.B. über eine Bohrung 31 im Rohransatz und Kanäle 32 im Bauteil 29 versorgt werden muß.

Am Außenumfang des Rohransatzes 27 ist z.B. ein anderes Bauteil 33 eines Planetengetriebes drehbar gelagert, das gleichfalls wieder eine Zylinder/Koben-Anordnung für eine hydraulisch betätigbare Kupplung 34 aufweist, die über eine Bohrung 35 im Rohransatz 27 mit Druckmittel versorgt werden muß. Die Bohrungen 31 und 35 sind im Rohransatz 27 zu diesem Zweck mit einer radialen Versetzung zueinander angeordnet, so daß die die Kupplungen getrennt voneinander beaufschlagt werden können.

Als Lageranordnungen für die Planetenradsatzbauteile 29 und 33 werden erfindungsgemäße Radial-Nadellager-Baueinheiten 40 und 41 verwendet, deren Aufbau nachfolgend beschrieben wird.

Die Radial-Nadellager-Baueinheit 40 besteht aus einer Außenhülse 42 die mit Rastzungen 43 zum Festlegen am Innenumfang 28 des Rohransatzes 27 versehen ist.

Eine Innenhülse 44 wird am Bauteil 29 aufgenommen und weist nach außen weisende Borde 45 und 46 auf. Eine Vielzahl von Nadeln 47 ist in einem Käfig 48 geführt, der nach außen weisende Borde 49 und 50 aufweist.

Zwischen dem Bord 45 der Innenhülse 44 und dem Bord 49 des Käfigs 48 ist ein nach außen spreizender Dichtring 51 und zwischen dem Bord 46 der Innenhülse 44, einem Zwischenring 52 und dem Bord 50 des Käfigs 48 ist ein nach außen spreizender Dichtring 53 angeordnet.

Die Innenhülse 44 und die Außenhülse 42 sind mit radialen Öffnungen 54 und 55 versehen, über die Druckmittel aus dem Bereich des Rohransatzes 27 zu den hydraulisch betätigbaren Kupplungen 30 bzw. 34 geführt werden kann.

In ähnlicher Weise besteht die Radial-Nadellager-Baueinheit 41 aus einer Außenhülse 56 mit ggf. Rastzungen 57 und einer Innenhülse 58 mit ggf. eben solchen Rastzungen 59.

Die Innenhülse 58 weist radial nach außen weisende Borde 60 und 61 auf, die wieder in Verbindung mit einem einer Vielzahl von Nadeln 62 und 63 führenden Käfig 64 und dessen nach außen weisenden Borden 65 und 66 wieder nach außen spreizende Dichtringe 67 und 68 aufnehmen, wobei benachbart den Borden 60 und 65 wieder ein Zwischenring 69 angeordnet ist.

Die Anordnung der Zwischenringe 52 bzw. 69 benachbart den Dichtringen 53 bzw. 67 ist erforderlich, um bei der nach der Montage der Nadeln und des Käfigs erforderlich werdenden Bördeloperation zum Herstellen der Borde 46 bzw. 60 eine saubere Führungsfläche für den Dichtring 53 bzw. 67 bereitzustellen.

Auch in diesem Fall ist die Außenhülse 56 und die Innenhülse 58 mit radialen Öffnungen 70 und 71 versehen, über die Druckmittel zu der hydraulisch betätigbaren Kupplung 34 geführt werden kann.

Durch die Anwendung der erfindungsgemäßen Radial-Nadellager-Baueinheit mit integrierter Radial-Axialabdichtung an beiden Seiten, kann auf die bisher übliche Anordung von Dichtringnuten am Rohransatz des Mittenträgers und darin eingelegte Dichtringe verzichtet weden. Der Vorteil der aufgezeigten Anordnung liegt darin, daß im Bereich der Außen- bzw. Innenhülse der Radial-Nadellager-Baueinheit optimale Gleitoberflächen für die Funktion der Dichtringe gegeben sind, ohne daß hierfür zusätzliche Operationen erforderlich sind, wie dies z.B. bisher durch die Bearbeitung der mit den Dichtringen zusammenwirkenden Oberflächen durch Schleifen oder Polieren erforderlich war.

Die Baueinheit ist weiterhin äußerst platzsparend, da Lagerung und Abdichtung nun eine Einheit bilden.

## Patentansprüche

1. Radial-Nadellager-Baueinheit mit integrierter Radial-Axialabdichtung und Axialabstützung, mit einer Außenhülse (5) mit zumindest einem nach innen weisenden Bord (9) und einem die Nadeln (7) führenden Käfig (8), der in Verbindung mit einer Anschlagscheibe (18) und einem elastischen Ring (17), die innerhalb der Außenhülse (5) liegen, eine Axialabdichtung und eine Axialabstützung bereitstellen,
**dadurch gekennzeichnet,** daß
- eine Innenhülse (6) mit zumindest einem nach außen weisenden Bord (12) benachbart dem nach innen weisenden Bord (9) der Außenhülse (5) versehen ist,
- der Käfig (8) mit zumindest einem nach außen weisenden Bord (14) versehen ist, der unmittelbar benachbart dem Bord an der Innenhülse (6) zentriert (bei 16) geführt ist und
- zwischen dem Bord (14) des Käfigs (8) und dem benachbarten Bord (12) der Innenhülsen (6) ein nach außen spreizender Dichtring (17) angeordnet ist.
- die Anschlagscheibe (18) zwischen dem nach außen weisenden Bord (12) der Innenhülsen (6) und dem nach innen weisenden Bord (9) der Außenhülse (5) angeordnet ist.

2. Radial-Nadellager-Baueinheit nach Anspruch nach 1,
**dadurch gekennzeichnet,** daß
- die Anschlagscheibe ein Axialgleitring ist.

3. Radial-Nadellager-Baueinheit nach Anspruch 2,
**dadurch gekennzeichnet,** daß
- der Axialgleitring (18) an seinen Seitenflanken (19 und 20) mit Schmierölnuten (21) versehen ist.

4. Radial-Nadellager-Baueinheit nach den Ansprüchen 2-3,
**dadurch gekennzeichnet,** daß
- an dem einen, dem Axialgleitring (18) abliegenden Ende der Innenhülse (6) eine innere Radialdichtung (22) angeformt ist.

5. Radial-Nadellager-Baueinheit nach den Ansprüchen 2-3,
**dadurch gekennzeichnet,** daß
- an dem einen, dem Axialgleitring (18) abliegenden Ende der Innenhülse (6') ein nach innen offener U-förmiger Haltering (23) für eine innere Radialdichtung (24) mit einer Dichtlippe (25) befestigt ist.

6. Radial-Nadellager-Baueinheit mit integrierter Radial-Axialabdichtung, mit einer Außenhülse (42) und einem eine Vielzahl von Nadeln (47) führenden Käfig (48) mit nach außen weisenden Borden (49 und 50),
**dadurch gekennzeichnet,** daß
- eine Innenhülse (44) zwei nach außen weisende Borde (45 und 46) aufweist, die axial außerhalb der Erstreckung der Borde des Käfigs (48) liegen und die Borde (49 und 50) des Käfigs (48) an der Innenhülse (44) zentriert geführt sind und
- zwischen den Borden (49 und 50) des Käfigs (48) und den benachbarten Borden (45 und 46) der Innenhülse (44) und ggf. einem zusätzlichen Zwischenring (52) nach außen spreizende Dichtringe (51 und 53) angeordnet sind.

7. Radial-Nadellager-Baueinheit nach Anspruch 6,
**dadurch gekennzeichnet,** daß
- die Innenhülse (44) und die Außenhülse (42) im Bereich zwischen den Dichtringen (51 und 53) mit radialen Öffnungen (54 und 55) versehen sind, die eine Verbindung zwischen einer Bohrung ( 31) in einem das Radial-Nadellager-Bauteil (40) aufnehmenden Gehäusebauteil (27) und Kanälen (32) im Wellenbauteil (29) herstellen.

8. Radial-Nadellager-Baueinheit nach einem der Ansprüche 1-7,
**dadurch gekennzeichnet,** daß
- die Innenhülse (6, 6' bzw. 44) und/oder die Außenhülse (5, 5' bzw. 42) mit ausgestellten Rastzungen (11 bzw. 43) zum Festlegen im Gehäuse und/oder an der Welle versehen sind.

## Claims

1. A radial needle bearing unit having integrated radial and axial sealing and axial support, having an outer bush (5) with at least one inwardly directed flange (9) and a cage (8) carrying the needles (7) which, in combination with a stop ring (18) and an elastic ring (17), both situated inside the outer bush (5), provides axial sealing and axial support,
characterised in that
- an inner bush (6) is provided having at least one outwardly directed flange (12) adjacent the inwardly directed flange (9) of the outer bush (5),
- the cage (8) is provided with at least one outwardly directed flange (14) which is guided (at 16) centred on the inner bush (6) immediately adjacent to the flange,
- an outwardly spreading sealing ring (17) is arranged between the flange (14) of the cage (8) and the adjacent flange (12) of the inner bush (6), and
- the stop ring (18) is arranged between the outwardly directed flange (12) of the inner bush (6) and the inwardly directed flange (9) of the outer bush (5).

2. A radial needle bearing unit according to claim 1,
characterised in that
- the stop ring is an axial bearing ring.

3. A radial needle bearing unit according to claim 2,
characterised in that
- the axial bearing ring (18) is provided with lubricating oil grooves (21) on its side flanks (19 and 20).

4. A radial needle bearing unit according to claim 2 or claim 3,
characterised in that
- an inner radial seal (22) is moulded on to the end of the inner bush (6) remote from the axial bearing ring (18).

5. A radial needle bearing unit according to claim 2 or claim 3,
characterised in that
- a U-shaped retaining ring (23), open to the inside, for retaining an inner radial seal (24) having a sealing lip (25) is secured at the end of the inner bush (6') remote from the axial bearing ring (18).

6. A radial needle bearing unit with integrated radial and axial sealing, having an outer bush (42) and a cage (48) carrying a set of needles (47) and having outwardly directed flanges (49 and 50),
characterised in that
- it includes an inner bush (44) having two outwardly directed flanges (45 and 46) that lie axially outside the extent of the flanges of the cage (48), the flanges (49 and 50) of the cage (48) being guided centred on the inner bush (44), and that
- outwardly-spreading sealing rings (51 and 52) are fitted between the flanges (49 and 50) of the cage (48) and the adjacent flanges (45 and 46) of the inner bush (44) and optionally an additional intermediate ring (52).

7. A radial needle bearing unit according to claim 6,
characterised in that
- the inner bush (44) and the outer bush (42) are provided, in the region between the sealing rings (51 and 53), with radial openings (54 and 55) that form a connection between a bore (31) in a housing component (27) accommodating the radial needle bearing unit (40) and passages (32) in the shaft (29).

8. A radial needle bearing unit according to any one of claims 1 to 7,
characterised in that
- the inner bush (6, 6' or 44) and/or the outer bush (5, 5' or 42) is or are provided with flared locking tongues (11 or 43) for securing it or them in the housing and/or on the shaft.

## Revendications

1. Unité modulaire de roulement à aiguilles radial avec étanchéité radiale et axiale intégrée et support axial, comprenant une douille extérieure (5) munie d'au moins un bord (9) pointant vers l'intérieur et une cage (8) guidant les aiguilles (7), lesquels, en relation avec un anneau d'arrêt (18) et un anneau élastique (17) situés à l'intérieur de la douille extérieure (5), offrent une étanchéité axiale et un support axial, caractérisée en ce qu'une douille intérieure (6) est munie d'au moins un bord (12) pointant vers l'extérieur au voisinage du bord (9) de la douille extérieure (5) pointant vers l'intérieur, en ce que la cage (8) est munie d'au moins un bord (14) pointant vers l'extérieur, lequel est guidé sur la douille intérieure (6) de manière centrée (en 16) directement à côté du bord, en ce qu'entre le bord (14) de la cage (8) et le bord adjacent (12) de la douille intérieure (6) est disposé un anneau d'étanchéité (17) s'écartant vers l'extérieur, et en ce que l'anneau d'arrêt (18) est placé entre le bord (12) de la douille intérieure (6) pointant vers l'extérieur et le bord (9) de la douille extérieure (5) pointant vers l'intérieur.

2. Unité modulaire de roulement à aiguilles radial selon la revendication 1, caractérisée en ce que l'anneau d'arrêt est un anneau de glissement axial.

3. Unité modulaire de roulement à aiguilles radial selon la revendication 2, caractérisée en ce que l'anneau de glissement axial (18) est muni sur ses côtés (19 et 20) de rainures pour l'huile de graissage (21).

4. Unité modulaire de roulement à aiguilles radial selon les revendications 2 et 3, caractérisée en ce qu'à l'une des extrémités de la douille intérieure (6) qui est opposée à l'anneau de glissement axial (18) est réalisé un joint radial intérieur (22).

5. Unité modulaire de roulement à aiguilles radial selon les revendications 2 et 3, caractérisée en ce qu'à l'une des extrémités de la douille intérieure (6') qui est opposée à l'anneau de glissement axial (18) est fixé un anneau de blocage (23) en forme de U ouvert vers l'intérieur, qui est destiné à un joint radial intérieur (24) muni d'une lèvre d'étanchéité (25).

6. Unité modulaire de roulement à aiguilles radial avec étanchéité radiale et axiale intégrée, comprenant une douille extérieure (42) et une cage (48) munie de bords pointant vers l'extérieur (49 et 50) qui guide un grand nombre d'aiguilles (47), caractérisée en ce qu'une douille intérieure (44) présente deux bords pointant vers l'extérieur (45 et 46), qui sont situés axialement en dehors de l'étendue des bords de la cage (48) et en ce que les bords (49 et 50) de la cage (48) sont guidés de manière centrée sur la douille intérieure (44), et en ce qu'entre les bords (49 et 50) de la cage (48) et les bords adjacents (45 et 46) de la douille intérieure (44) et, éventuellement, un anneau intercalaire supplémentaire (52) sont disposés des anneaux d'étanchéité s'écartant vers l'extérieur (51 et 53).

7. Unité modulaire de roulement à aiguilles radial selon la revendication 6, caractérisée en ce que la douille intérieure (44) et la douille extérieure ( 42 ) sont munies dans la zone entre les anneaux d'étanchéité (51 et 53) d'ouvertures radiales (54 et 55) qui établissent une liaison entre un perçage (31) dans un élément de carter (27) recevant le roulement à aiguilles axial (40) et des canaux (32) dans l'arbre (29).

8. Unité modulaire de roulement à aiguilles radial selon l'une des revendications 1 à 7, caractérisée en ce que la douille intérieure (6, 6' ou 44) et/ou la douille extérieure (5, 5' ou 42) sont munies de languettes d'enclenchement saillantes (11 ou 43) pour les immobiliser dans le carter et/ou sur l'arbre.
